# EUROPEAN PATENT APPLICATION

(11) **EP 4 657 561 A2**
(43) Date of publication of application: **03.12.2025**
(21) Application number: 25179407.9
(22) Date of filing: 28.05.2025
(51) Int. Cl.: H01M 4/36, C01G 45/02, C01G 53/04, H01M 4/505, H01M 4/525, H01M 10/0525, H01M 10/0567

(54) **ELECTROCHEMICAL DEVICE AND ELECTRONIC DEVICE**

(30) Priority: 28.05.2024 CN 202410671756
(71) Applicant: Ningde Amperex Technology Ltd., Ningde City, Fujian Province 352100 (CN)
(72) Inventor: ZHOU, Juan, Ningde City, Fujian Province, China, 352100 (CN); LANG, Ye, Ningde City, Fujian Province, China, 352100 (CN); CHENG, Shiyang, Ningde City, Fujian Province, China, 352100 (CN); ZHANG, Hui, Ningde City, Fujian Province, China, 352100 (CN)
(74) Representative: Icosa

(57) **Abstract**

An electrochemical device includes a positive electrode plate. The positive electrode plate includes a positive active material layer. The positive active material layer includes a positive active material. After the electrochemical device is discharged, a molar fraction of an M1 element in the positive active material included in the positive electrode plate in a fully discharged state is a. The M1 element includes Ni, Co, and Mn. A molar fraction of Ni in the positive active material is b. A molar fraction of Mn in the positive active material is c. A molar fraction of an M2 element in the positive active material is d. The M2 element includes at least one of Na, K, or Mg. The value of b/a is 0.4 to 0.6, the value of c/a is 0.4 to 0.6, and the value of d/a is 0.04 to 0.06.

## Description

### TECHNICAL FIELD

This application relates to the field of electrochemical energy storage, and in particular, to an electrochemical device and an electronic device.

### BACKGROUND

With the development of electrochemical energy storage technology, higher requirements have been imposed on the cycle performance and safety performance of electrochemical devices (such as a lithium-ion battery). Typically, increasing the voltage of an electrochemical device is an effective approach to increasing the energy density of the electrochemical device. However, after the voltage of the electrochemical device is increased, problems may arise such as release of oxygen from a positive electrode, decomposition of an electrolyte solution, gas generated by an electrode assembly, and a sharp decline in cycle performance. Therefore, it is expected to further improve the cycle performance and high-temperature storage performance of electrochemical devices.

### SUMMARY

This application provides an electrochemical device. The electrochemical device includes a positive electrode plate. The positive electrode plate includes a positive active material layer. The positive active material layer includes a positive active material. After the electrochemical device is discharged, the positive active material included in the positive electrode plate in a fully discharged state includes an M1 element, and the molar fraction of the M1 element in the positive active material is a. The M1 element includes three elements Ni, Co, and Mn. The molar fraction of Ni in the positive active material is b. The molar fraction of Mn in the positive active material is c. The positive active material includes an M2 element. The molar fraction of the M2 element in the positive active material is d. The M2 element includes at least one of Na, K, or Mg. The value of b/a is 0.4 to 0.6, the value of c/a is 0.4 to 0.6, and the value of d/a is 0.04 to 0.06. In this way, the structural stability of the positive active material is enhanced, thereby improving cycle performance and high-temperature storage performance of the electrochemical device. If the value of d/a is excessively large, the reversible capacity of the positive active material will deteriorate. If the doping content is excessively low, that is, if the value of d/a is excessively small, the improvement in the stability of the structure of the positive active material is not significant, and is not enough to significantly improve the cycle performance of the positive active material.

In some embodiments, a dQ/dV-V curve of the electrochemical device during discharge exhibits at least one peak at a voltage greater than or equal to 4.1 V. This peak is characteristic of the positive active material of this application.

In some embodiments, the electrochemical device further includes an electrolyte solution. The electrolyte solution includes a dinitrile compound. The dinitrile compound includes at least one of succinonitrile, glutaronitrile, adiponitrile, pimelonitrile, suberonitrile, azelanitrile, sebaconitrile, or methyl glutaronitrile. The dinitrile compound can suppress the polarization phenomenon of the electrolyte solution. In addition, the dinitrile compound can act in unison with the M2 doping element in the positive active material to form a stable interface layer on the negative electrode, with the interface layer containing the M2 doping element, thereby reducing the internal resistance of the electrochemical device and improving the cycle performance of the electrochemical device.

In some embodiments, based on a mass of the electrolyte solution, a mass percent of the dinitrile compound is 0.1% to 10%. When the mass content of the dinitrile compound in the electrolyte solution is greater than 10%, the viscosity of the electrolyte solution is increased, thereby adversely affecting the ion transport rate. When the mass percent of the dinitrile compound in the electrolyte solution is less than 0.1%, the effect of the dinitrile compound on improving the cycle performance and high-temperature storage performance of the electrochemical device is relatively limited. In some embodiments, based on a mass of the electrolyte solution, a mass percent of the dinitrile compound is 1% to 6%.

In some embodiments, the electrolyte solution further includes a sulfur-oxygen double-bonded compound. The sulfur-oxygen double-bonded compound includes at least one of 1,3-propane sultone, ethylene sulfate, methylene methane disulfonate, 4-methyl ethylene sulfate, 1,4-butane sultone, propene-1,3-sultone, 1,3-propane disulfonic anhydride, 2,4-butane sultone, or pentaerythritol bicyclic sulfate. The sulfur-oxygen double-bonded compound can improve the interface stability of the electrochemical device.

In some embodiments, based on a mass of the electrolyte solution, a mass percent of a sulfur-oxygen double bond-containing compound is 0.1% to 8%. When the mass percent of the sulfur-oxygen double-bonded compound in the electrolyte solution is greater than 8%, the excess sulfur-oxygen double-bonded compound reacts with the lithium in the electrochemical device, thereby consuming active lithium. When the mass percent of the sulfur-oxygen double-bonded compound in the electrolyte solution is less than 0.1%, the effect of the sulfur-oxygen double-bonded compound on improving the cycle performance and high-temperature storage performance of the electrochemical device is relatively limited.

In some embodiments, when the positive electrode plate is characterized by X-ray diffraction in a fully charged state of the electrochemical device, a diffraction peak A is exhibited in a diffraction angle range of 36.3° to 37.3°, a peak intensity of the diffraction peak A is I_{A}, a diffraction peak B is exhibited in a diffraction angle range of 43.6° to 44.6°, a peak intensity of the diffraction peak B is I_{B}, and a value of I_{A}/I_{B} is 1.75 to 1.85. When the value of I_{A}/I_{B} is 1.75 to 1.85, the value improves the cycle performance and high-temperature storage performance of the electrochemical device.

In some embodiments, the molar fraction of Li in the positive active material is e, and the value of d/e is 0.05 to 0.07. If the doping content of the M2 element is excessively high, the reversible capacity of the positive active material will deteriorate. If the doping content of the M element is excessively low, the improvement in the structural stability of the positive active material is not significant, and is not enough to significantly improve the cycle performance of the positive active material.

In some embodiments, the positive active material includes a substrate and a coating layer. The substrate includes Ni, Mn, and an M2 element, the coating layer includes B, a molar fraction of B in the positive active material is f, and a value of f/a is 0.02 to 0.05. The B element contained in the positive active material coats the surface of the positive active material, thereby further suppressing the release of oxygen on the surface of the positive active material, reducing direct contact between the electrolyte solution and the surface of the positive active material, suppressing the decomposition of the electrolyte solution and the occurrence of side reactions, and in turn, improving the cycle performance and high-temperature storage performance of the electrochemical device. In addition, if the value of f/a is excessively large, it means that the coating amount is excessively high, and may deteriorate the capacity of the electrochemical device. If the value of f/a is excessively small, it means that the coating amount is excessively low, and may be not enough to cover the highly active surface of the positive active material.

An embodiment of this application further provides an electronic device, including the electrochemical device.

By making the value of b/a range from 0.4 to 0.6, the value of c/a from 0.4 to 0.6, and the value of d/a from 0.04 to 0.06, this application enhances the structural stability of the positive active material, thereby improving cycle performance and high-temperature storage performance of the electrochemical device. In addition, doping the positive active material with the M2 element throughout the bulk phase can further stabilize the crystal structure of the positive active material.

The "fully charged state" in this application means state after the electrochemical device is charged at a constant current of 0.5C at 25 °C until the voltage reaches 4.35 V and then charged at a constant voltage of 4.35 V until the current drops to 0.01C. The "fully discharged state" in this application means a state after the electrochemical device is discharged at a constant current of 0.5C at 25 °C until the voltage drops to 2.8 V.

### BRIEF DESCRIPTION OF DRAWINGS

FIG. 1 is a discharge curve of an electrochemical device according to Embodiment 7 of this application;
FIG. 2 is a cross-section polishing scanning electron microscope (SEM) image of a positive electrode plate according to Embodiment 7 of this application; and
FIG. 3 is an X-ray diffraction (XRD) pattern of a positive electrode plate of an electrochemical device in a fully charged state according to Embodiment 7 of this application.

### DETAILED DESCRIPTION

The following embodiments enable a person skilled in the art to understand this application more comprehensively, but without limiting this application in any way.

This application provides an electrochemical device. The electrochemical device includes a positive electrode plate. In some embodiments, the positive electrode plate includes a positive active material layer. The positive active material layer includes a positive active material. In some embodiments, after the electrochemical device is discharged, the positive active material included in the positive electrode plate in a fully discharged state includes an M1 element. The molar fraction of the M1 element in the positive active material is a. The M1 element includes three elements Ni, Co, and Mn. The molar fraction of Ni in the positive active material is b. The molar fraction of Mn in the positive active material is c. The value of b/a is 0.4 to 0.6, and the value of c/a is 0.4 to 0.6. In this way, the structural stability of the positive active material is enhanced, thereby improving cycle performance and high-temperature storage performance of the electrochemical device.

In some embodiments, the molar fraction of an M2 element in the positive active material is d. The M2 element includes at least one of Na, K, or Mg. The value of d/a is 0.04 to 0.06. Doping the positive active material with the M2 element throughout the bulk phase can further stabilize the crystal structure of the positive active material. In some embodiments, the value of d/a is 0.04, 0.05, 0.06, or a value falling within a range formed by any two thereof. If the value of d/a is excessively large, the reversible capacity of the positive active material will deteriorate. If the doping content is excessively low, that is, if the value of d/a is excessively small, the improvement in the stability of the structure of the positive active material is not significant, and is not enough to significantly improve the cycle performance of the positive active material.

In some embodiments, a dQ/dV-V curve of the electrochemical device during discharge exhibits at least one peak at a voltage greater than or equal to 4.1 V. This peak is characteristic of the positive active material of this application.

In some embodiments, the electrochemical device further includes an electrolyte solution. The electrolyte solution includes a dinitrile compound. The dinitrile compound includes at least one of succinonitrile, glutaronitrile, adiponitrile, pimelonitrile, suberonitrile, azelanitrile, sebaconitrile, or methyl glutaronitrile. The dinitrile compound can suppress the polarization phenomenon of the electrolyte solution. In addition, the dinitrile compound can act in unison with the M2 doping element in the positive active material to form a stable interface layer on the negative electrode, with the interface layer containing the M2 doping element, thereby reducing the internal resistance of the electrochemical device and improving the cycle performance of the electrochemical device.

In some embodiments, based on a mass of the electrolyte solution, a mass percent of the dinitrile compound is 0.1% to 10%. In some embodiments, the mass percent of the dinitrile compound in the electrolyte solution is 0.1%, 0.5%, 1%, 2%, 3%, 4%, 5%, 6% 7%, 8%, 9%, 10%, or a value falling within a range formed by any two thereof. When the mass content of the dinitrile compound in the electrolyte solution is greater than 10%, the viscosity of the electrolyte solution is increased, thereby adversely affecting the ion transport rate. When the mass percent of the dinitrile compound in the electrolyte solution is less than 0.1%, the effect of the dinitrile compound on improving the cycle performance and high-temperature storage performance of the electrochemical device is relatively limited. In some embodiments, based on a mass of the electrolyte solution, the mass percent of the dinitrile compound is preferably 1% to 6%.

In some embodiments, the electrolyte solution further includes a sulfur-oxygen double-bonded compound. The sulfur-oxygen double-bonded compound includes at least one of 1,3-propane sultone, ethylene sulfate, methylene methane disulfonate, 4-methyl ethylene sulfate, 1,4-butane sultone, propene-1,3-sultone, 1,3-propane disulfonic anhydride, 2,4-butane sultone, or pentaerythritol bicyclic sulfate. The sulfur-oxygen double-bonded compound can improve the interface stability of the electrochemical device. In some embodiments, based on a mass of the electrolyte solution, a mass percent of a sulfur-oxygen double bond-containing compound is 0.1% to 8%. In some embodiments, a mass percent of the sulfur-oxygen double-bonded compound in the electrolyte solution is 0.1%, 0.5%, 1%, 2%, 3%, 4%, 5%, 6%, 7%, 8%, or a value falling within a range formed by any two thereof. When the mass percent of the sulfur-oxygen double-bonded compound in the electrolyte solution is greater than 8%, the excess sulfur-oxygen double-bonded compound reacts with the lithium in the electrochemical device, thereby consuming active lithium. When the mass percent of the sulfur-oxygen double-bonded compound in the electrolyte solution is less than 0.1%, the effect of the sulfur-oxygen double-bonded compound on improving the cycle performance and high-temperature storage performance of the electrochemical device is relatively limited.

In some embodiments, when the positive electrode plate is characterized by X-ray diffraction in a fully charged state of the electrochemical device, a diffraction peak A is exhibited in a diffraction angle range of 36.3° to 37.3°, a peak intensity of the diffraction peak A is I_{A}, a diffraction peak B is exhibited in a diffraction angle range of 43.6° to 44.6°, a peak intensity of the diffraction peak B is I_{B}, and a value of I_{A}/I_{B} is 1.75 to 1.85. When the value of I_{A}/I_{B} is 1.75 to 1.85, the value improves the cycle performance and high-temperature storage performance of the electrochemical device.

In some embodiments, an average diameter of secondary particles of the positive active material is 6 µm to 14 µm. If the average diameter of the positive active material is excessively large, the compaction density of the positive active material layer will be excessively small, thereby reducing the energy density. If the average diameter of the positive active material is excessively small, the compaction density of the positive active material layer will be excessively large, thereby being prone to cause particle fragmenting, increase the specific surface area of the material, aggravate the release of transition metal on the positive electrode, disrupt the structure of the positive electrode, and deteriorate the cycle performance of the electrochemical device. In addition, due to the increase in compaction density, the porosity of the electrode plate decreases, and the infiltration effect of the electrolyte solution is prone to be inferior, thereby deteriorating the cycle performance of the electrochemical device. In some embodiments, the interior of a secondary particle includes holes. In this way, a buffer space is provided for the strain of the secondary particle during charging and discharging, thereby reducing the risk of rupture of the secondary particle, and in turn, improving the cycle performance and high-temperature storage performance of the electrochemical device. In some embodiments, the secondary particle contains a gap extending from the inside to the surface. In this way, the deintercalation of lithium ions inside the secondary particle can be promoted, and the kinetic performance of the electrochemical device can be improved.

In some embodiments, the molar fraction of Li in the positive active material is e, and the value of d/e is 0.05 to 0.07. In some embodiments, the value of d/e may be 0.05, 0.06, 0.07, or a value falling within a range formed by any two thereof. If the doping content of the M2 element is excessively high, the reversible capacity of the positive active material will deteriorate. If the doping content of the M element is excessively low, the improvement in the structural stability of the positive active material is not significant, and is not enough to significantly improve the cycle performance of the positive active material.

In some embodiments, the positive active material includes a substrate and a coating layer. The substrate includes Ni, Mn, and an M2 element, the coating layer includes B, a molar fraction of B in the positive active material is f, and a value of f/a is 0.02 to 0.05. The B element contained in the positive active material coats the surface of the positive active material, thereby further suppressing the release of oxygen on the surface of the positive active material, reducing direct contact between the electrolyte solution and the surface of the positive active material, suppressing the decomposition of the electrolyte solution and the occurrence of side reactions, and in turn, improving the cycle performance and high-temperature storage performance of the electrochemical device. In some embodiments, the value of f/a may be 0.02, 0.03, 0.04, 0.05, or a value falling within a range formed by any two thereof. If the value of f/a is excessively large, it means that the coating amount is excessively high, and may deteriorate the capacity of the electrochemical device. If the value of f/a is excessively small, it means that the coating amount is excessively low, and may be not enough to cover the highly active surface of the positive active material.

In some embodiments, the positive electrode plate may further include a positive current collector. The positive active material layer is disposed on one side or both sides of the positive current collector. In some embodiments, the positive current collector may be an aluminum foil, or may be another positive current collector commonly used in this field. In some embodiments, the thickness of the positive current collector may be 1 µm to 50 µm. In some embodiments, the positive current collector may be connected to the positive active material layer by a bottom coating. Alternatively, the positive current collector may be directly connected to the positive active material layer.

In some embodiments, the positive active material layer may further include a conductive agent and a binder. In some embodiments, the conductive agent in the positive active material layer may include at least one of conductive carbon black, conductive graphite, graphene, or carbon nanotubes. In some embodiments, the binder in the positive active material layer may include at least one of polyvinylidene difluoride (PVDF), polytetrafluoroethylene (PTFE), polyvinyl butyral (PVB), poly(ethylene-co-vinyl acetate) (EVA), or polyvinyl alcohol (PVA). In some embodiments, a mass ratio between the positive active material, the conductive agent, and the binder is (80 to 99) : (0.1 to 10) : (0.1 to 10), but this is merely an example, and any other appropriate mass ratio may apply.

In some embodiments, the electrochemical device may further include a negative current collector and a separator. The separator is disposed between the positive electrode plate and the negative electrode plate. In some embodiments, the negative electrode plate includes a negative current collector and a negative active material layer. The negative active material layer is disposed on one side or both sides of the negative current collector. In some embodiments, the negative current collector may be at least one of a copper foil, a nickel foil, or a carbon-based current collector. In some embodiments, the negative active material layer may include a negative active material, a conductive agent, and a binder. In some embodiments, the negative active material may include at least one of graphite or a silicon-based material. In some embodiments, the silicon-based material includes at least one of silicon, a silicon-oxygen material, a silicon-carbon material, or a silicon-oxygen-carbon material. In some embodiments, the conductive agent in the negative active material layer may include at least one of conductive carbon black, Ketjen black, graphite flakes, graphene, acetylene black, carbon nanotubes, or carbon fiber. In some embodiments, the binder in the negative active material layer may include at least one of styrene-butadiene rubber (SBR), polyvinylidene difluoride (PVDF), polytetrafluoroethylene (PTFE), polyvinyl butyral (PVB), water-based acrylic resin, or carboxymethyl cellulose (CMC). In some embodiments, a mass ratio between the negative active material, the conductive agent, and the binder in the negative active material layer may be (78 to 98.5): (0.1 to 10): (0.1 to 10). Understandably, the materials and mass ratio specified above are merely exemplary, and any other appropriate materials and mass ratio may be used instead.

In some embodiments, the separator includes a porous substrate layer and a heat-resistant layer. In some embodiments, the porous substrate layer includes at least one of polyethylene, polypropylene, polyethylene terephthalate, polyimide, or aramid fiber. In some embodiments, the thickness of the separator falls within a range of 3 µm to 20 µm. In some embodiments, the pore diameter of the porous substrate layer falls within a range of 0.01 µm to 1 µm.

In some embodiments, the heat-resistant layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. The binder in the heat-resistant layer is at least one selected from polyvinylidene fluoride, poly(vinylidene fluoride-co-hexafluoropropylene), polyamide, polyacrylonitrile, acrylic ester polymer, polyacrylic acid, sodium polyacrylate, sodium carboxymethyl cellulose, polyvinylpyrrolidone, polyvinyl ether, polytetrafluoroethylene, or polyhexafluoropropylene.

In some embodiments of this application, the electrochemical device includes, but is not limited to, a lithium-ion battery. In some embodiments, the electrolyte solution may further include a nonaqueous solvent. The nonaqueous solvent may be a carbonate ester compound, a carboxylate ester compound, an ether compound, another organic solvent, or any combination thereof.

The carbonate ester compound may be a chain carbonate ester compound, a cyclic carbonate ester compound, a fluorocarbonate ester compound, or any combination thereof.

Examples of the chain carbonate ester compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate ester compound are ethylene carbonate (EC), propylene carbonate (PC), butylene carbonate (BC), vinyl ethylene carbonate (VEC), or any combination thereof. Examples of the fluorocarbonate ester compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

An embodiment of this application further provides an electronic device containing the electrochemical device. The electronic device is not particularly limited herein, and may be any electronic device known in the prior art. In some embodiments, the electronic device may include, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, unmanned aerial vehicle, lighting appliance, toy, game console, watch, electric tool, flashlight, camera, large household battery, lithium-ion capacitor, or the like.

Some specific embodiments are enumerated below to give a clearer description of this application, using a lithium-ion battery as an example.

### Embodiment 1

Preparing a negative electrode plate: Artificial graphite, conductive carbon black, and polyvinylidene difluoride (PVDF) are mixed at a mass ratio of 97 : 1 : 2, and dispersed in deionized water to formulate a negative electrode slurry in which the solid content of 80%. After being well stirred, the negative electrode slurry is evenly applied onto one surface of negative current collector copper foil, and dried at 80 °C to obtain a negative electrode plate coated with a negative active material layer on a single side. The above steps are repeated on the other side of the copper foil to obtain a negative electrode plate coated with the negative active material layer on both sides. The negative electrode plate is cold-pressed and slit, and tabs are welded to the electrode plate to obtain a finished negative electrode plate.

Preparing a positive electrode plate: A positive active material, conductive carbon black, carbon nanotubes, and polyvinylidene difluoride are mixed at a mass ratio of 93.7 : 2.8 : 1.2 : 2.3, and dispersed in N-methyl-pyrrolidone to formulate a positive electrode slurry in which the solid content is 71%. After being well stirred and mixed, the positive electrode slurry is evenly applied onto one surface of positive current collector aluminum foil, and dried at 90 °C to obtain a positive electrode plate coated with a positive active material layer on a single side. The above steps are repeated on the other surface of the aluminum foil to obtain a positive electrode plate coated with the positive active material layer on both sides. The positive electrode plate is cold-pressed and slit, and tabs are welded to the electrode plate to obtain a finished positive electrode plate.

Steps of preparing the positive active material are as follows:
1) A mixed solution containing NiSO₄ and MnSO₄ is prepared at a molar ratio of Ni : Mn = 50 : 50, with the NiSO₄ added in an amount of 1.55 kg and the MnSO₄ in an amount of 1.51 kg. The mixed solution is mixed with a precipitant (NaOH solution) and a complexant (ammonia water) to react. The reaction time is controlled to be 60 hours, the ammonia concentration is 1 mol/L, and the pH value is 12.2, so as to obtain a nickel-manganese precursor TM(OH)₂ (TM = Ni/Mn) with an average particle diameter Dᵥ₅₀ of 11 µm.
2) The nickel-manganese precursor and sodium carbonate are ground and mixed well at a molar ratio of 1 : 0.5, with the precursor added in an amount of 9.1 kg and the sodium carbonate in an amount of 5.4 kg. The mixture is calcined at 800 °C in an air atmosphere for 20 hours to obtain a reaction product in which the molar ratio of Ni to Mn is 50 : 50. The reaction product is pulverized, sieved, and demagnetized to obtain product I.
3) The product I is mixed with a mixture of lithium hydroxide and lithium nitrate (at a molar ratio of 5 : 5). The mass ratio of the mixture of lithium hydroxide and lithium nitrate to the product I is 10 : 1. The mixture is heated to 400 °C at a rate of 10 °C/min. The temperature is kept for 6 hours, and then the mixture is quenched to room temperature at a cooling rate of 50 °C/min in a mixed atmosphere of Ar and air (the volume ratio of Ar to air is 1 : 2) to obtain a product II.
4) The product II is washed and soaked in deionized water, and then dried.
5) The product II is finally pulverized and sieved to obtain a positive active material in which the molar ratio of Na to (Ni+Mn) is 10.7%. The Dᵥ₅₀ of the material is 9.4 µm. In some embodiments, when there is a coating layer containing B, the positive active material and boric acid are ground and mixed well at a corresponding ratio, and calcined at 200 °C for 12 hours in an air atmosphere to obtain a final positive active material.

Preparing a separator: An 8 µm-thick porous polyethylene (PE) film is used as a separator.

Preparing an electrolyte solution: Lithium hexafluorophosphate is mixed with a nonaqueous organic solvent in an argon atmosphere glovebox in which the water content is less than 10 ppm. The nonaqueous organic solvent is a mixture of ethylene carbonate (EC), propylene carbonate (PC), diethyl carbonate (DEC), propyl propionate (PP), and ethyl propionate (EP) mixed at a mass ratio of 1 : 1 : 1 : 1 : 1, and the mixture is mixed well to formulate an electrolyte solution in which the mass percent of lithium hexafluorophosphate is 12.5%. In addition, the electrolyte solution constituents may be added in the corresponding amount as required according to Table 1.

Preparing a lithium-ion battery: The positive electrode plate, the separator, and the negative electrode plate are stacked in sequence in such a way that the separator is located between the positive electrode plate and the negative electrode plate to serve a function of separation, and then the stacked structure is wound to obtain an electrode assembly. The electrode assembly is placed in an aluminum laminated film that serves as an outer package. The electrode assembly is dehydrated at 80 °C, and then the above electrolyte solution is injected into the package, and the package is sealed. Processes such as chemical formation, degassing, and shaping are performed to obtain a lithium-ion battery.

Except for the differences shown in Table 1, the parameters in Embodiments 2 to 36 and Comparative Embodiments 1 to 7 are the same as those in Embodiment 1.

In addition, in this application, the corresponding parameters are measured by using the following methods.

### 1) Particle morphology and average diameter

A positive electrode plate is sectioned longitudinally by means of ion polishing, and then the morphology of the positive active material particles in the cross-section of the positive electrode plate is observed by using a scanning electron microscope (instrument model: ZEISS SEM, acceleration voltage: 0.1 KV to 30 KV). In an image of the cross-section, 50 positive active material particles are randomly selected. The average value of the longest diameters of the particles is used as the average diameter of the positive active material.

### 2) Element content

For an initial positive active material, the positive active material is dissolved by using a mixed solvent (for example, 0.4 g of positive active material is dissolved in a mixed solvent of 10 ml of aqua regia (nitric acid and hydrochloric acid mixed at a ratio of 1 : 1) and 2 ml of hydrofluoric acid HF). The solution is diluted to a final volume of 100 mL, and then the content of each element in the solution is determined using an inductively coupled plasma (ICP) analyzer.

For the positive active material in the positive electrode plate, the positive electrode plate is sectioned longitudinally by means of ion polishing, and then the cross-section of the positive electrode plate is observed using a ZEISS scanning electron microscope (SEM). The positive active material is tested with an energy dispersive spectrometer (EDS) to determine the element content in the positive active material.

### 3) dQ/dV test

A lithium-ion battery is charged at a constant current of 0.1C rate at 25 °C until the voltage reaches 4.35 V, and then discharged at a rate of 0.1C until the voltage drops to 2.8 V. The differential capacity curve (dQ/dV curve) is obtained by differentiating the capacity-voltage curve (Q-V curve).

### 4) X-ray diffraction test

A lithium-ion battery is fully discharged, and then disassembled to obtain a positive electrode plate. The positive electrode plate is analyzed by means of X-ray diffraction using an X-ray diffractometer (model: Bruker D8 ADVANCE, target material: Cu Kα, scanning angle: 5-80°).

### 5) Gravimetric discharge capacity test

A lithium-ion battery is charged at a constant current of 0.5C at a constant temperature of 25 °C until the voltage reaches 4.35 V, and then the battery is charged at a constant voltage until the current drops to 0.05C. Subsequently, the battery is discharged at a constant current of 0.2C until the voltage drops to 2.8 V. The gravimetric discharge capacity = 0.2C discharge capacity/mass of the positive active material.

### 6) Cycle performance test

A lithium-ion battery is initially charged and discharged in a 45 °C environment first. The battery is charged at a constant current of 0.5C until the voltage reaches 4.35 V, and then charged at a constant voltage until the current drops to 0.05C, and then discharged at a constant current of 0.5C until the voltage drops to 2.8 V, thereby completing one charge-and-discharge cycle. The above charge-and-discharge cycle is repeated. The discharge capacity at the end of the 3^{rd} cycle and the discharge capacity at the end of the 400^{th} cycle are recorded. 45 °C cycle capacity retention rate = (400th-cycle discharge capacity/3rd - cycle discharge capacity) × 100%.

### 7) High-temperature storage performance test

A lithium-ion battery is charged at 25 °C until the voltage reaches 4.35 V, and then the lithium-ion battery is clamped by two metal sheets. The thickness of the lithium-ion battery is measured with a micrometer. The thickness of the lithium-ion battery at this time is defined as an initial thickness H₀ of the lithium-ion battery. Subsequently, the lithium-ion battery is stored in an 85 °C thermostat for 24 hours. The thickness of the lithium-ion battery is measured using the same method. The thickness of the lithium-ion battery after storage is defined as H₁. Thickness expansion rate of the battery after storing at 85 °C = (H1 - H0)/H0 × 100%.

Table 1 and Table 2 show parameters and evaluation results in Embodiments 1 to 36 and Comparative Embodiments 1 to 7.

**Table 1**

| | Molar fraction a of (Ni+Co+Mn) | Molar fraction b of Ni | Molar fraction c of Mn | Molar fraction d of element M2 | Molar fraction e of Li | Molar fraction f of element B | b/a | c/a | d/a |
|---|---|---|---|---|---|---|---|---|---|
| Embodiment 1 | 1.02 | 0.510 | 0.510 | 0.057 | 0.950 | / | 0.500 | 0.500 | 0.056 |
| Comparative Embodiment 1 | 1.02 | 0.306 | 0.714 | 0.057 | 0.950 | / | 0.300 | 0.700 | 0.056 |
| Embodiment 2 | 1.02 | 0.408 | 0.612 | 0.057 | 0.950 | / | 0.400 | 0.600 | 0.056 |
| Embodiment 3 | 1.02 | 0.612 | 0.408 | 0.057 | 0.950 | / | 0.600 | 0.400 | 0.056 |
| Comparative Embodiment 2 | 1.02 | 0.714 | 0.306 | 0.057 | 0.950 | / | 0.700 | 0.300 | 0.052 |
| Comparative Embodiment 3 | 1.02 | 0.510 | 0.510 | / | 0.970 | / | 0.500 | 0.500 | / |
| Comparative Embodiment 4 | 1.03 | 0.515 | 0.515 | 0.040 | 0.957 | / | 0.500 | 0.500 | 0.039 |
| Embodiment 4 | 1.03 | 0.515 | 0.515 | 0.050 | 0.930 | / | 0.500 | 0.500 | 0.049 |
| Embodiment 5 | 1.02 | 0.510 | 0.510 | 0.057 | 0.910 | / | 0.500 | 0.500 | 0.056 |
| Embodiment 6 | 1.02 | 0.510 | 0.510 | 0.060 | 0.905 | / | 0.500 | 0.500 | 0.059 |
| Comparative Embodiment 5 | 1.02 | 0.510 | 0.510 | 0.067 | 0.890 | / | 0.500 | 0.500 | 0.066 |
| Embodiment 7 | 1.01 | 0.051 | 0.051 | 0.056 | 0.948 | 0.0303 | 0.500 | 0.500 | 0.055 |
| Embodiment 8 | 1.01 | 0.051 | 0.051 | 0.040 | 0.956 | 0.0303 | 0.500 | 0.500 | 0.040 |
| Embodiment 9 | 1.01 | 0.051 | 0.051 | 0.050 | 0.933 | 0.0303 | 0.500 | 0.500 | 0.050 |
| Embodiment 10 | 1.01 | 0.051 | 0.051 | 0.059 | 0.929 | 0.0303 | 0.500 | 0.500 | 0.058 |
| Embodiment 11 | 1.01 | 0.051 | 0.051 | 0.060 | 0.910 | 0.0303 | 0.500 | 0.500 | 0.059 |
| Embodiment 12 | 1.01 | 0.051 | 0.051 | 0.064 | 0.941 | 0.0303 | 0.500 | 0.500 | 0.063 |
| Embodiment 13 | 1.01 | 0.051 | 0.051 | 0.056 | 0.778 | 0.0303 | 0.500 | 0.500 | 0.055 |
| Embodiment 14 | 1.01 | 0.051 | 0.051 | 0.056 | 0.933 | 0.0123 | 0.500 | 0.500 | 0.055 |
| Embodiment 15 | 1.01 | 0.051 | 0.051 | 0.056 | 0.933 | 0.0245 | 0.500 | 0.500 | 0.055 |
| Embodiment 16 | 1.01 | 0.051 | 0.051 | 0.056 | 0.933 | 0.0432 | 0.500 | 0.500 | 0.055 |
| Embodiment 17 | 1.01 | 0.051 | 0.051 | 0.056 | 0.933 | 0.0501 | 0.500 | 0.500 | 0.055 |
| Embodiment 18 | 1.01 | 0.051 | 0.051 | 0.056 | 0.933 | 0.0622 | 0.500 | 0.500 | 0.055 |
| Embodiment 19 | 1.01 | 0.051 | 0.051 | 0.056 | 0.933 | 0.0303 | 0.500 | 0.500 | 0.055 |
| Embodiment 20 | 1.01 | 0.051 | 0.051 | 0.056 | 0.933 | 0.0303 | 0.500 | 0.500 | 0.055 |
| Embodiment 21 | 1.01 | 0.051 | 0.051 | 0.056 | 0.933 | 0.0303 | 0.500 | 0.500 | 0.055 |
| Embodiment 22 | 1.01 | 0.051 | 0.051 | 0.056 | 0.933 | 0.0303 | 0.500 | 0.500 | 0.055 |
| Embodiment 23 | 1.01 | 0.051 | 0.051 | 0.056 | 0.933 | 0.0303 | 0.500 | 0.500 | 0.055 |
| Embodiment 24 | 1.01 | 0.051 | 0.051 | 0.056 | 0.933 | 0.0303 | 0.500 | 0.500 | 0.055 |
| Embodiment 25 | 1.01 | 0.051 | 0.051 | 0.056 | 0.933 | 0.0303 | 0.500 | 0.500 | 0.055 |
| Embodiment 26 | 1.01 | 0.051 | 0.051 | 0.056 | 0.933 | 0.0303 | 0.500 | 0.500 | 0.055 |
| Embodiment 27 | 1.01 | 0.051 | 0.051 | 0.056 | 0.933 | 0.0303 | 0.500 | 0.500 | 0.055 |
| Embodiment 28 | 1.01 | 0.051 | 0.051 | 0.056 | 0.933 | 0.0303 | 0.500 | 0.500 | 0.055 |
| Embodiment 29 | 1.01 | 0.051 | 0.051 | 0.056 | 0.933 | 0.0303 | 0.500 | 0.500 | 0.055 |
| Embodiment 30 | 1.01 | 0.051 | 0.051 | 0.056 | 0.933 | 0.0303 | 0.500 | 0.500 | 0.055 |
| Embodiment 31 | 1.01 | 0.051 | 0.051 | 0.056 | 0.933 | 0.0303 | 0.500 | 0.500 | 0.055 |
| Embodiment 32 | 1.01 | 0.051 | 0.051 | 0.056 | 0.933 | 0.0303 | 0.500 | 0.500 | 0.055 |
| Embodiment 33 | 1.01 | 0.051 | 0.051 | 0.056 | 0.933 | 0.0303 | 0.500 | 0.500 | 0.055 |
| Embodiment 34 | 1.01 | 0.051 | 0.051 | 0.056 | 0.933 | 0.0303 | 0.500 | 0.500 | 0.055 |
| Embodiment 35 | 1.01 | 0.051 | 0.051 | 0.056 | 0.933 | 0.0303 | 0.500 | 0.500 | 0.055 |
| Embodiment 36 | 1.01 | 0.051 | 0.051 | 0.056 | 0.933 | 0.0303 | 0.500 | 0.500 | 0.055 |
| Comparative Embodiment 6 | 1.04 | 0.521 | 0.521 | / | 0.970 | / | 0.500 | 0.500 | / |
| Comparative Embodiment 7 | 1.04 | 0.521 | 0.521 | / | 0.970 | / | 0.500 | 0.500 | / |

**Table 2**

| | d/e | f/a | I_{A}/I_{B} | Additive | Content (wt%) | 25 °C discharge capacity (mAh/g) | Capacity retention rate after cycling at 45 °C for 400 cycles | Expansion rate after storing at 85 °C |
|---|---|---|---|---|---|---|---|---|
| Embodiment 1 | 0.06 | / | 1.82 | / | / | 200.4 | 71.7% | 8.8% |
| Comparative Embodiment 1 | 0.06 | / | 1.82 | / | / | 202.2 | 64.7% | 15.1% |
| Embodiment 2 | 0.06 | / | 1.82 | / | / | 201.4 | 70.8% | 9.2% |
| Embodiment 3 | 0.06 | / | 1.82 | / | / | 203.3 | 70.9% | 9.1% |
| Comparative Embodiment 2 | 0.06 | / | 1.82 | / | / | 201.1 | 65.2% | 15.3% |
| Comparative Embodiment 3 | / | / | 1.83 | / | / | 210.2 | 63.2% | 21.3% |
| Comparative Embodiment 4 | 0.042 | / | 1.82 | | | 201.1 | 66.7% | 14.3% |
| Embodiment 4 | 0.054 | / | 1.82 | / | / | 198.2 | 70.8% | 9.1% |
| Embodiment 5 | 0.063 | / | 1.82 | / | / | 195.3 | 71.2% | 8.9% |
| Embodiment 6 | 0.066 | / | 1.82 | / | / | 195.1 | 74.3% | 8.3% |
| Comparative Embodiment 5 | 0.075 | / | 1.82 | / | / | 194.7 | 67.9% | 11.2% |
| Embodiment 7 | 0.059 | 0.03 | 1.82 | Methyl glutaronitrile + pentaerythritol bicyclic sulfate | 5+4 | 200.4 | 81.7% | 6.3% |
| Embodiment 8 | 0.042 | 0.03 | 1.82 | Methyl glutaronitrile + pentaerythritol bicyclic sulfate | 5+4 | 201.9 | 71.8% | 8.9% |
| Embodiment 9 | 0.054 | 0.03 | 1.82 | Methyl glutaronitrile + pentaerythritol bicyclic sulfate | 5+4 | 200.9 | 72.5% | 8.7% |
| Embodiment 10 | 0.064 | 0.03 | 1.82 | Methyl glutaronitrile + pentaerythritol bicyclic sulfate | 5+4 | 198.7 | 76.7% | 7.8% |
| Embodiment 11 | 0.066 | 0.03 | 1.82 | Methyl glutaronitrile + pentaerythritol bicyclic sulfate | 5+4 | 197.1 | 79.2% | 6.5% |
| Embodiment 12 | 0.068 | 0.03 | 1.82 | Methyl glutaronitrile + pentaerythritol bicyclic sulfate | 5+4 | 194.5 | 78.2% | 7.0% |
| Embodiment 13 | 0.072 | 0.03 | 1.82 | Methyl glutaronitrile + pentaerythritol bicyclic sulfate | 5+4 | 198.3 | 71.9% | 8.8% |
| Embodiment 14 | 0.06 | 0.012 | 1.82 | Methyl glutaronitrile + pentaerythritol bicyclic sulfate | 5+4 | 208.3 | 76.4% | 10.8% |
| Embodiment 15 | 0.06 | 0.024 | 1.83 | Methyl glutaronitrile + pentaerythritol bicyclic sulfate | 5+4 | 204.7 | 78.6% | 8.3% |
| Embodiment 16 | 0.06 | 0.043 | 1.82 | Methyl glutaronitrile + pentaerythritol bicyclic sulfate | 5+4 | 197.4 | 81.9% | 5.9% |
| Embodiment 17 | 0.06 | 0.05 | 1.82 | Methyl glutaronitrile + pentaerythritol bicyclic sulfate | 5+4 | 195.1 | 82.3% | 5.1% |
| Embodiment 18 | 0.06 | 0.062 | 1.82 | Methyl glutaronitrile + pentaerythritol bicyclic sulfate | 5+4 | 195.1 | 74.8% | 9.1% |
| Embodiment 19 | 0.06 | 0.03 | 1.81 | Succinonitrile + pentaerythritol bicyclic sulfate | 5+4 | 200.1 | 78.3% | 8.1% |
| Embodiment 20 | 0.06 | 0.03 | 1.82 | Glutaronitrile + pentaerythritol bicyclic sulfate | 5+4 | 200.3 | 76.5% | 8.4% |
| Embodiment 21 | 0.06 | 0.03 | 1.83 | Adiponitrile + pentaerythritol bicyclic sulfate | 5+4 | 199.5 | 78.1% | 7.6% |
| Embodiment 22 | 0.06 | 0.03 | 1.82 | Azelanitrile + pentaerythritol bicyclic sulfate | 5+4 | 201.2 | 78.5% | 7.7% |
| Embodiment 23 | 0.06 | 0.03 | 1.82 | Methyl glutaronitrile +1,3-propane sultone | 5+4 | 200.8 | 77.1% | 7.9% |
| Embodiment 24 | 0.06 | 0.03 | 1.81 | Methyl glutaronitrile +1,4-butane sultone | 5+4 | 200.6 | 78.9% | 8.1% |
| Embodiment 25 | 0.06 | 0.03 | 1.82 | Methyl glutaronitrile + ethylene sulfate | 5+4 | 201.3 | 77.4% | 7.9% |
| Embodiment 26 | 0.06 | 0.03 | 1.81 | Methyl glutaronitrile + methylene methane disulfonate | 5+4 | 200.9 | 76.1% | 6.7% |
| Embodiment 27 | 0.06 | 0.03 | 1.82 | Methyl glutaronitrile + pentaerythritol bicyclic sulfate | 4+4 | 198.9 | 75.2% | 7.3% |
| Embodiment 28 | 0.06 | 0.03 | 1.82 | Methyl glutaronitrile + pentaerythritol bicyclic sulfate | 6+4 | 200.9 | 80.1% | 6.2% |
| Embodiment 29 | 0.06 | 0.03 | 1.82 | Methyl glutaronitrile + pentaerythritol bicyclic sulfate | 5+3 | 199.5 | 77.3% | 7.3% |
| Embodiment 30 | 0.06 | 0.03 | 1.82 | Methyl glutaronitrile + pentaerythritol bicyclic sulfate | 5+5 | 200.7 | 78.6% | 6.8% |
| Embodiment 31 | 0.06 | 0.03 | 1.82 | Methyl glutaronitrile + pentaerythritol bicyclic sulfate | 1+8 | 200.5 | 78.2% | 7.1% |
| Embodiment 32 | 0.06 | 0.03 | 1.82 | Methyl glutaronitrile + pentaerythritol bicyclic sulfate | 2+7 | 200.4 | 77.2% | 7.0% |
| Embodiment 33 | 0.06 | 0.03 | 1.82 | Methyl glutaronitrile + pentaerythritol bicyclic sulfate | 3+6 | 200.8 | 77.5% | 7.2% |
| Embodiment 34 | 0.06 | 0.03 | 1.82 | Methyl glutaronitrile + pentaerythritol bicyclic sulfate | 7+2 | 199.8 | 78.1% | 6.9% |
| Embodiment 35 | 0.06 | 0.03 | 1.82 | Methyl glutaronitrile + pentaerythritol bicyclic sulfate | 8+1 | 199.9 | 78.2% | 7.2% |
| Embodiment 36 | 0.06 | 0.03 | 1.82 | Methyl glutaronitrile + pentaerythritol bicyclic sulfate | 9+1 | 199.8 | 78.9% | 7.1% |
| Comparative Embodiment 6 | / | / | 1.83 | / | / | 210.2 | 65.2% | 21.3% |
| Comparative Embodiment 7 | / | / | 1.83 | Methyl glutaronitrile + pentaerythritol bicyclic sulfate | 5+4 | 208.1 | 70.7% | 12.1% |

As can be seen from Embodiments 1 to 3 versus Comparative Embodiments 1 to 2, when the value of b/a is 0.4 to 0.6 and the value of c/a is 0.4 to 0.6, the cycle capacity retention rate and high-temperature storage expansion rate of the lithium-ion battery are superior.

As can be seen from Embodiments 1 and Embodiments 4 to 6 versus Comparative Embodiments 3 to 5, when the value of d/a is 0.04 to 0.06, the cycle capacity retention rate and high-temperature storage expansion rate of the lithium-ion battery are superior.

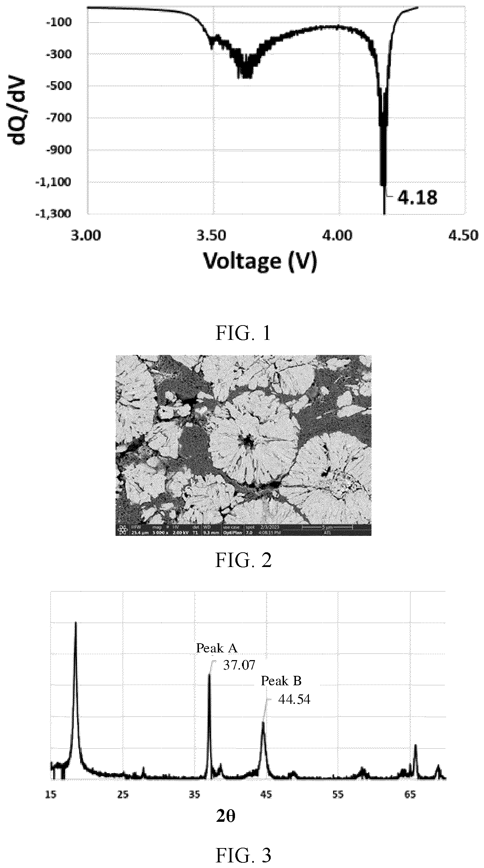

As can be seen from comparison of Embodiments 7 to 30, when a dinitrile compound and a sulfur-oxygen double-bonded compound are added to the electrolyte solution, the cycle capacity retention rate and high-temperature storage expansion rate of the lithium-ion battery are improved more effectively. FIG. 1 is a discharge curve of an electrochemical device according to Embodiment 7 of this application; FIG. 2 is a cross-section polishing scanning electron microscope (SEM) image of a positive electrode plate according to Embodiment 7 of this application; and FIG. 3 is an X-ray diffraction (XRD) pattern of a positive electrode plate of an electrochemical device in a fully charged state according to Embodiment 7 of this application.

As can be seen from comparison of Embodiments 7 to 13, when the value of d/e is 0.05 to 0.07, the cycle capacity retention rate and high-temperature storage expansion rate of the lithium-ion battery are improved more effectively.

As can be seen from comparison of Embodiments 14 to 18, when the value of f/a is 0.02 to 0.05, the cycle capacity retention rate of the lithium-ion battery is improved more effectively. In addition, within this range, with the increase of the value of f/a, the discharge capacity of the lithium-ion battery assumes a tendency to decline, and the storage expansion rate assumes a tendency to decrease.

Embodiments 19 to 22 show that different dinitrile compounds in use can improve the cycle capacity retention rate and the high-temperature storage expansion rate of the lithium ion battery to varying degrees. Embodiments 23 to 26 show that different sulfur-oxygen double-bonded compounds in use can improve the cycle capacity retention rate and the high-temperature storage expansion rate of the lithium-ion battery to varying degrees.

As can be seen from comparison of Embodiments 27 to 36, when additives are added to the electrolyte solution in a corresponding amount, the additives can improve the cycle capacity retention rate and the high-temperature storage expansion rate of the lithium-ion battery to varying degrees.

Comparative Embodiments 6 and 7 show that the dinitrile compound and sulfur-oxygen double-bonded compound added to the electrolyte solution can improve the cycle capacity retention rate and the high-temperature storage expansion rate of the lithium-ion battery.

Described above are merely preferred embodiments of this application and the technical principles thereof. A person skilled in the art understands that the scope of disclosure in this application is not limited to the technical solutions formed by a specific combination of the foregoing technical features, but encompasses other technical solutions formed by any combination of the foregoing technical features or equivalents thereof, for example, a technical solution formed by replacing any of the foregoing features with a technical feature disclosed herein and serving similar functions.

## Claims

1. An electrochemical device, **characterized in that** the electrochemical device comprises a positive electrode plate, the positive electrode plate comprises a positive active material layer, and the positive active material layer comprises a positive active material;
after the electrochemical device is discharged, the positive active material comprised in the positive electrode plate in a fully discharged state comprises an M1 element, a molar fraction of the M1 element in the positive active material is a, and the M1 element comprises three elements: Ni, Co, and Mn;
a molar fraction of Ni in the positive active material is b, and a molar fraction of Mn in the positive active material is c;
the positive active material comprises an M2 element, a molar fraction of the M2 element in the positive active material is d, and the M2 element comprises at least one of Na, K, or Mg; and
wherein, a value of b/a is 0.4 to 0.6, a value of c/a is 0.4 to 0.6, and a value of d/a is 0.04 to 0.06.

2. The electrochemical device according to claim 1, **characterized in that** a dQ/dV-V curve of the electrochemical device during discharge exhibits at least one peak at a voltage greater than or equal to 4.1 V.

3. The electrochemical device according to claim 1 or 2, **characterized in that** the electrochemical device further comprises an electrolyte solution, the electrolyte solution comprises a dinitrile compound; and the dinitrile compound comprises at least one of succinonitrile, glutaronitrile, adiponitrile, pimelonitrile, suberonitrile, azelanitrile, sebaconitrile, or methyl glutaronitrile.

4. The electrochemical device according to claim 3, **characterized in that**, based on a mass of the electrolyte solution, a mass percentage of the dinitrile compound is 0.1% to 10%.

5. The electrochemical device according to claim 3, **characterized in that**, based on a mass of the electrolyte solution, a mass percentage of the dinitrile compound is 1% to 6%.

6. The electrochemical device according to claim 3, **characterized in that** the electrolyte solution further comprises a sulfur-oxygen double-bonded compound; and the sulfur-oxygen double-bonded compound comprises at least one of 1,3-propane sultone, ethylene sulfate, methylene methane disulfonate, 4-methyl ethylene sulfate, 1,4-butane sultone, propene-1,3-sultone, 1,3-propane disulfonic anhydride, 2,4-butane sultone, or pentaerythritol bicyclic sulfate.

7. The electrochemical device according to claim 6, **characterized in that**, based on a mass of the electrolyte solution, a mass percentage of the sulfur-oxygen double-bonded compound is 0.1% to 8%.

8. The electrochemical device according to any one of claims 1 to 7, **characterized in that**, in an X-ray diffraction of the positive electrode plate in a fully charged state of the electrochemical device, a diffraction peak A is exhibited in a diffraction angle range of 36.3° to 37.3°, a peak intensity of the diffraction peak A is I_{A}, a diffraction peak B is exhibited in a diffraction angle range of 43.6° to 44.6°, a peak intensity of the diffraction peak B is I_{B}, and a value of I_{A}/I_{B} is 1.75 to 1.85.

9. The electrochemical device according to any one of claims 1 to 8, **characterized in that** a molar fraction of Li in the positive active material is e, and a value of d/e is 0.05 to 0.07.

10. The electrochemical device according to any one of claims 1 to 9, **characterized in that** the positive active material comprises a substrate and a coating layer; the substrate comprises Ni, Mn, and an M2 element, the coating layer comprises B, a molar fraction of B in the positive active material is f, and a value of f/a is 0.02 to 0.05.

11. An electronic device, comprising the electrochemical device according to any one of claims 1 to 10.
